# EUROPÄISCHE PATENTSCHRIFT

(11) **EP 1 101 021 B1**
(45) Veröffentlichungstag und Bekanntmachung des Hinweises auf die Patenterteilung: **23.10.2002**
(21) Anmeldenummer: 99940108.6
(22) Anmeldetag: 02.08.1999
(51) Int. Cl.: F02B 31/08

(54) **KANALSYSTEM, INSBESONDERE SAUGROHR FÜR EINE BRENNKRAFTMASCHINE**
PORT SYSTEM, ESPECIALLY AN INDUCTION MANIFOLD FOR AN INTERNAL COMBUSTION ENGINE
SYSTEME DE CANAUX, EN PARTICULIER COLLECTEUR D'ADMISSION D'UN MOTEUR A COMBUSTION INTERNE

(30) Priorität: 01.08.1998 DE 19834836
(43) Veröffentlichungstag der Anmeldung: 23.05.2001
(73) Patentinhaber: FILTERWERK MANN & HUMMEL GmbH, 71631 Ludwigsburg (DE)
(72) Erfinder: JESSBERGER, Thomas, D-71277 Rutesheim (DE); KLOTZ, Arthur, D-71686 Remseck (DE); LEIPELT, Rudolf, 74394 Hessigheim (DE); MAIER, Stefan, D-74354 Besigheim (DE); PAFFRATH, Holger, 50259 Pulheim (DE); PIETROWSKI, Herbert, D-74385 Pleidelsheim (DE); REHMANN, Achim, D-75249 Kieselbronn (DE); VACULIK, Robert, D-71672 Marbach (DE)
(74) Vertreter: Voth, Gerhard, Dipl.-Ing.
(86) Internationale Anmeldenummer: EP9905557
(87) Internationale Veröffentlichungsnummer: WO00008320

(56) Entgegenhaltungen:
- EP-A- 0 260 381
- EP-A- 0 337 099
- DE-A- 4 032 295
- DE-A- 4 334 180
- DE-C- 361 648
- FR-A- 2 108 817
- FR-A- 2 203 112
- GB-A- 2 088 006
- GB-A- 2 100 805
- US-A- 3 577 801
- US-A- 4 838 820
- US-A- 4 995 370
- US-A- 5 592 917
- PATENT ABSTRACTS OF JAPAN vol. 1997, no. 6, 30. Juni 1997 (1997-06-30) & JP 09 049442 A (SANSHIN), 18. Februar 1997 (1997-02-18)
- PATENT ABSTRACTS OF JAPAN vol. 7, no. 199 (M-240) [1344], 3. September 1983 (1983-09-03) & JP 58 098634 A (YAMAHA), 11. Juni 1983 (1983-06-11)
- FISHER: "Carburrettors: their installation and tuning" , CHAPMAN & HALL , 31.12.1969 XP002123740 Seite 38; Abbildungen 1-8
- PATENT ABSTRACTS OF JAPAN vol. 9, no. 84 (M-371) [1807], 13. April 1985 (1985-04-13) & JP 59 213925 A (NISSAN), 3. Dezember 1984 (1984-12-03)
- PATENT ABSTRACTS OF JAPAN vol. 1997, no. 4, 30. April 1997 (1997-04-30) & JP 08 334037 A (AISAN), 17. Dezember 1996 (1996-12-17)
- PATENT ABSTRACTS OF JAPAN vol. 12, no. 347 (M-743), 19. September 1988 (1988-09-19) & JP 63 109244 A (NIPPON DENSO), 13. Mai 1988 (1988-05-13)

## Beschreibung

### Stand der Technik

Die Erfindung betrifft ein Kanalsystem, insbesondere für die Verwendung als Saugrohr für eine Brennkraftmaschine, die in den einzelnen Saugkanälen zu den Zylindern Schaltklappen aufweist, nach dem Oberbegriff des Patentanspruchs 1.

Eine solche Anordnung von Schaltklappen in den einzelnen Saugkanälen eines Saugrohres ist zum Beispiel aus der DE 38 43 509 bekannt. Jeder der Zylinder besitzt zwei getrennte Ansaugkanäle für die Verbrennungsluft . Durch die Schaltklappen kann jeweils einer der Saugkanäle zu den Zylindern verschlossen werden, wodurch im Teillastbereich des Motors der effektive Ansaugquerschnitt für die Zylinder verringert werden kann. Die Ansteuerung der Schaltklappen kann über eine Schubstange erfolgen, die über einen Schaltklappenantrieb bewegt wird. Die Schaltklappen laufen auf einen mechanischen Anschlag. Somit kann die Schaltklappe nur in den Stellungen offen oder geschlossen betrieben werden. Dabei wird die Elastizität der Schubstange bewußt ausgenutzt, um durch Verformung in den Anschlagstellungen der Schaltklappen Fertigungstoleranzen auszugleichen.

Nachteilig an der bekannten Lösung ist, daß die Schaltklappen nur zwei Schaltzustände annehmen können. Wünschenswert wäre jedoch eine stufenlose Verstellbarkeit der Schaltklappen mit definierten Klappenstellungen. Für einen stufenlosen Betrieb der Schaltklappen müßte auf den Toleranzausgleich der elastischen Schubstange verzichtet werden. Dies wäre nur möglich, wenn die Saugrohr- bzw. Schaltkomponenten mit kleinsten Fertigungstoleranzen hergestellt würden. Dies ist jedoch unter Beachtung wirtschaftlicher Aspekte nicht möglich.

Die Aufgabe der Erfindung besteht darin, ein Saugrohr mit stufenlos verstellbaren Schaltklappen zu schaffen, welches in der Wirtschaftlichkeit der Herstellung mit bekannten Lösungen für Schaltklappen konkurrieren kann. Diese Aufgabe wird durch die Merkmale des Patentanspruchs 1 gelöst.

### Vorteile der Erfindung

Das erfindungsgemäße Saugrohr besitzt Schaltklappen, die in den Saugkanälen des Saugrohrs zwischen Sammelraum und zylinderseitigen Austritt angeordnet sind. Die Ansteuerung der Schaltklappen geschieht zum Beispiel durch Klappenkurbeln oder Zahnräder. Ein Antrieb überträgt die Schaltkraft, zum Beispiel durch ein Gestänge über die Ansteuerung auf die Schaltklappen. Der Antrieb muß die Möglichkeit einer stufenlosen Verstellung der Schaltklappen gewährleisten. Die mechanischen Kopplungen zwischen Steuergestänge, Schaltklappen und Antrieb müssen spielfrei ausgeführt sein. Nur so läßt sich eine in Abhängigkeit von der Stellung des Antriebs genau definierte Klappensteliung erreichen. Damit die Schaltklappen untereinander immer dieselbe Stellung aufweisen, müssen fertigungsbedingte Toleranzen im Saugrohr sowie im Schaltklappensystem ausgeglichen werden. Hierzu ist eine Einstellung vorgesehen, die bevorzugt in eine der mechanischen Kopplungen integriert ist. Die Einstellung muß so ausgeführt sein, daß sich jede einzelne Schaltklappe in ihrer Stellung verändern und anschließend fixieren läßt.

Sofern die Schaltklappen in der Nähe der Zylindereinlässe angeordnet sind, kann die genau definierte Klappenstellung zur Erzeugung einer drallbehafteten Strömung in den Verbrennungsraum der Zylinder genutzt werden. Dies hat den Vorteil einer besseren Gemischbildung im Teillastbereich des Motors, wodurch Verbrauch und Schadstoffemission vermindert werden können. Durch die stufenlose Verstellbarkeit ist es weiterhin möglich, Schaltklappen in allen zu den Zylinder führenden Saugkanälen anzuordnen. Natürlich dürfen dann nicht alle Schaltklappen ganz geschlossen werden, da in diesem Fall die Luftzufuhr vollständig abgeriegelt wäre.

Es ist zweckmäßig die Einstellung direkt am Antrieb vorzunehmen. Dies kann zum Beispiel durch eine Klemmplatte erfolgen, in die einzelne Steuerstangen zu den Klappenkurbeln eingespannt werden. Dies hat den Vorteil, daß die Einstellung leicht zugänglich in der Mitte des zylinderseitigen Saugrohrflansches angebracht werden kann. Dies erleichtert die Nachjustierung der Schaltklappen bei Wartungsarbeiten.

Eine besondere Ausführungsform der Erfindung sieht vor, das Steuergestänge aus einem strangförmigen Halbzeug herzustellen, an denen als Gelenk eine Buchse angebracht ist, die in Lagerzapfen der Ansteuerung gesteckt wird. Die Steuerstangen können zum Beispiel aus einem Draht bestehen, der an den Enden schraubenfederförmig gewickelt ist, wobei die Buchse in die Schraubenwicklung eingepreßt wird. Es ist aber auch ein U-Profil denkbar, welches direkt zum Beispiel durch eine Lötverbindung an die Buchse angebracht wird. Die Verwendung von Halbzeugen für das Steuergestänge führt zu einer Steigerung der Wirtschaftlichkeit der vorgeschlagenen Lösung.

Sofern die Einstellung am Klappenantrieb vorgesehen ist, ist es vorteilhaft, die Abstände zwischen der Drehachse des Antriebs und den Einspannungen sowie zwischen den Klappenachsen und den Ansteuerungen der Klappen gleich lang auszuführen. Dadurch führt das Schaltgestänge bei der Betätigung der Schaltklappen rein translatorische Bewegungen aus. Die Einspannungen am Antrieb können daher starr ausgeführt sein, da zwischen Schaltstangen und Antrieb keine rotatorischen Relativbewegungen auftreten.

In einer anderen Variante der Erfindung ist die Einstellung in die mechanische Kopplung zwischen Ansteuerung der Schaltklappen und der Kraftübertragung integriert. Diese Anordnung hat den Vorteil, daß die Kraftübertragung über ein einziges Bauteil, zum Beispiel eine Schubstange, erfolgen kann. Eine zweckmäßige Variante ist bei dieser Bauform ein Zahnriemen als Kraftübertragung. Als Ansteuerungen kommen Zahnräder zum Einsatz, wobei die Einstellung dadurch realisiert werden kann, daß die Verzahnung des Zahnrades auf einem Grundkörper verdreht und fixiert werden kann. Genauso ist es möglich, die Fixierung zwischen der Klappenachse und dem Zahnrad vorzunehmen. Der Zahnriemen ist als Standardteil eine äußerst kostengünstige Möglichkeit die Kraftübertragung zwischen Antrieb und Schaltklappen zu gewährleisten.

Gemäß einer besonderen Ausführungsform der Erfindung wird die Ansteuerung der Schaltklappen durch Doppelhebel gewährleistet, die an ihren Enden mit zwei Seilzügen gekoppelt sind. Die Einstellung der Schaltklappen kann durch Klemmgelenke an den Enden der Doppelhebel erfolgen. Die Kraftübertragung durch Seilzüge hat den Vorteil, daß der Antrieb durch Umlenkung der Seile an beliebigen Stellen im Motorraum plaziert werden kann. Dies ist besonders dann von Vorteil, wenn in der Nähe des Saugrohrs kein Einbauraum für den Antrieb vorgesehen werden kann.

In einer weiteren Variante der Erfindung ist die Einstellung in die mechanische Kopplung zwischen der Schaltklappenachse und den, als Ansteuerung wirkenden Klappenkurbeln oder Zahnrädern vorgesehen. Die Klappenkurbel kann zum Beispiel in eine Bohrung der Klappenachse gesteckt werden. Die Verbindung der beiden Bauteile kann insbesondere durch eine Klebeverbindung erfolgen. Alternativ ist es möglich eine Verzahnung in der Steckverbindung zwischen Klappenkurbel und Klappenachse vorzusehen. Sofern eine Klebeverbindung zum Einsatz kommt, kann diese vorteilhafterweise elastisch ausgeführt sein. Da in den Klappenstellungen zwischen den Anschlägen nur kleine Kräfte zischen den Klappen wirken, ist trotz der Elastizität der Klebeverbindung eine definierte Stellung im Stellbereich der Klappen gewährleistet. In den Anschlagstellungen der Klappen kann durch die Elastizität der Klebeverbindung jedoch in Grenzen ein zusätzlicher Toleranzausgleich stattfinden. Diese Lösung vereint also die vorteilhaften Funktionsprinzipien bekannter Lösungen mit denen der erfinderischen Lösung.

In einer besonderen Ausführungsform sind die zur Anwendung kommenden Schaltklappen montagegespritzte Klappenmodule, die am Saugrohr befestigt werden können. Diese Maßnahme vergrößert die Wirtschaftlichkeit der Lösung.

Zur Herstellung des erfinderischen Saugrohrs wird ein Verfahren vorgestellt, welches eine effiziente Justierung der Schaltklappen bei der Montage ermöglicht. Dies wird durch die Verwendung einer Lehre erreicht, die die Schaltklappen in die gewünschte Stellung zueinander und zum Antrieb bringt. Nach einer Vormontage des Schaltgestänges und des Antriebs können nun die Einstellungen fixiert werden. Dadurch werden die Schaltklappen in ihrer Stellung zueinander unveränderlich. Eventuelle Fertigungstoleranzen werden automatisch kompensiert. Am Ende des Montagevorgangs wird die Lehre wieder entfernt.

### Zeichnung

Weiteren Einzelheiten werden in den Zeichnungen anhand von schematischen Ausführungsbeispielen beschrieben. Hierbei zeigen:
- Figur 1: die schematische Darstellung eines Saugrohrs für eine Vierzylinder- Brennkraftmaschine mit dem erfindungsgemäßen Steuergestänge in der Aufsicht,
- Figur 2: ein Schaltgestänge mit einer zwischen den mittleren Zylindern angeordneten Klemmplatte als Einstellmöglichkeit für drahtförmige Steuerstangen,
- Figur 3: den Schnitt A-A aus Figur 2, der die Funktionsweise der Einstellung an der Klemmplatte zeigt,
- Figur 4: das Gelenk zwischen Steuerstange und Klappenkurbel gemäß Schnitt B-B in Figur 2,
- Figur 5: die Anordnung der Steuermechanik in einem Steuerkasten, die durch mit den Klappenachsen verbundene Zahnrädern und einen Zahnriemen gebildet wird, als Aufsicht,
- Figur 6: eine Steuermechanik in einem Steuerkasten, die durch Doppelhebel an den Klappenachsen gebildet wird, die durch Seilzüge angesteuert werden, als Aufsicht,
- Figur 7: die Ansteuerung der Klappenkurbeln durch eine einzige Steuerstange, untergebracht in einem Steuergehäuse, als Aufsicht,
- Figur 8: den Längsschnitt durch einen Saugkanal mit montagegespritzter Schaltklappe, wobei die Einstellung zwischen Klappenkurbel und Klappenachse erfolgt und durch eine Verzahnung realisiert ist und
- Figur 9: einen Schnitt entsprechend Figur 8, wobei die Verbindung zwischen Klappenachse und Steuerzahnrad durch eine Klebverbindung realisiert ist.

### Beschreibung der Ausführungsbeispiele

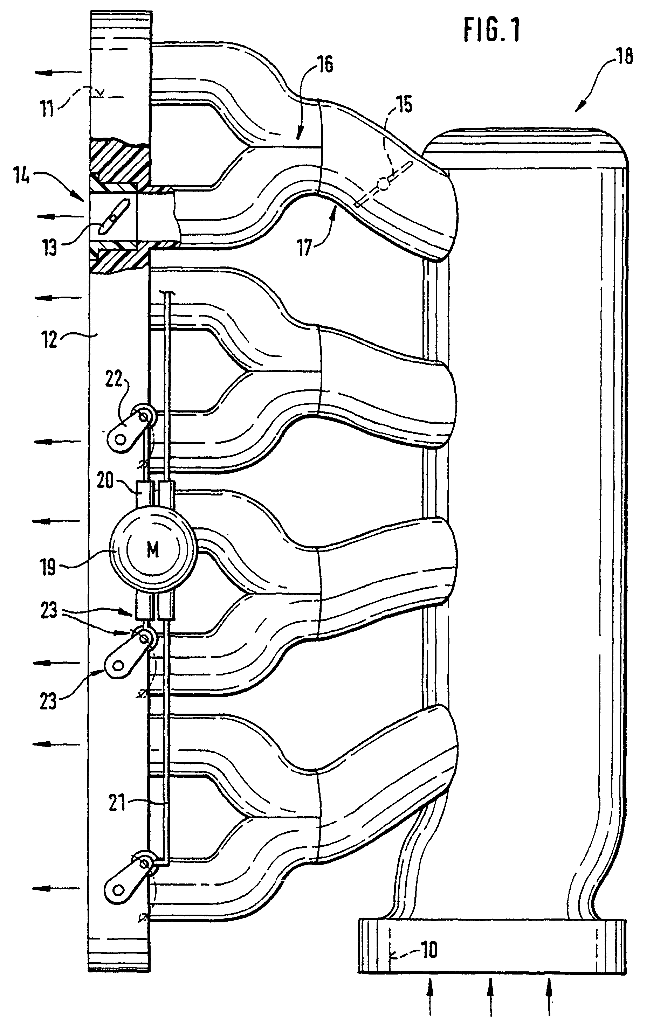

In Figur 1 ist ein Saugrohr schematisch dargestellt, an dem eine stufenlose Klappenverstellung angebracht ist. Das Saugrohr weist einen Einlaß 10 und zylinderseitige Auslässe 11 auf, wobei letztere in einen Zylinderkopfflansch 12 untergebracht sind. In jeweils einem der Auslässe 11 pro Zylinder ist eine Schaltklappe 13 untergebracht, die Teil eines in den Zylinderkopfflansch 12 eingebrachten montagegespritzten Klappenmoduls 14 ist. Jeder Zylinder weist somit einen ungeregelten und einen geregelten Einlaß auf. Die Luftzufuhr im geregelten Einlaß läßt sich durch die Steuermechanik stufenlos regulieren oder auch ganz abschalten. Mit Hilfe der Steuermechanik ließen sich jedoch auch Drosselklappen 15 ansteuern, die zwischen einer Verzweigung 16 in einem Saugkanal 17 und einem Sammelraum 18 angebracht sind.

Die Steuermechanik besteht aus einem Antrieb 19, Einstellungen 20, Kraftübertragungen 21 und den Drosselklappen 13 mit Ansteuerungen 22. Die Bauteile der Steuermechanik sind durch mechanische Kopplungen 23 miteinander verbunden. Die Einstellung 20 kann in eine der mechanischen Kopplungen integriert werden.

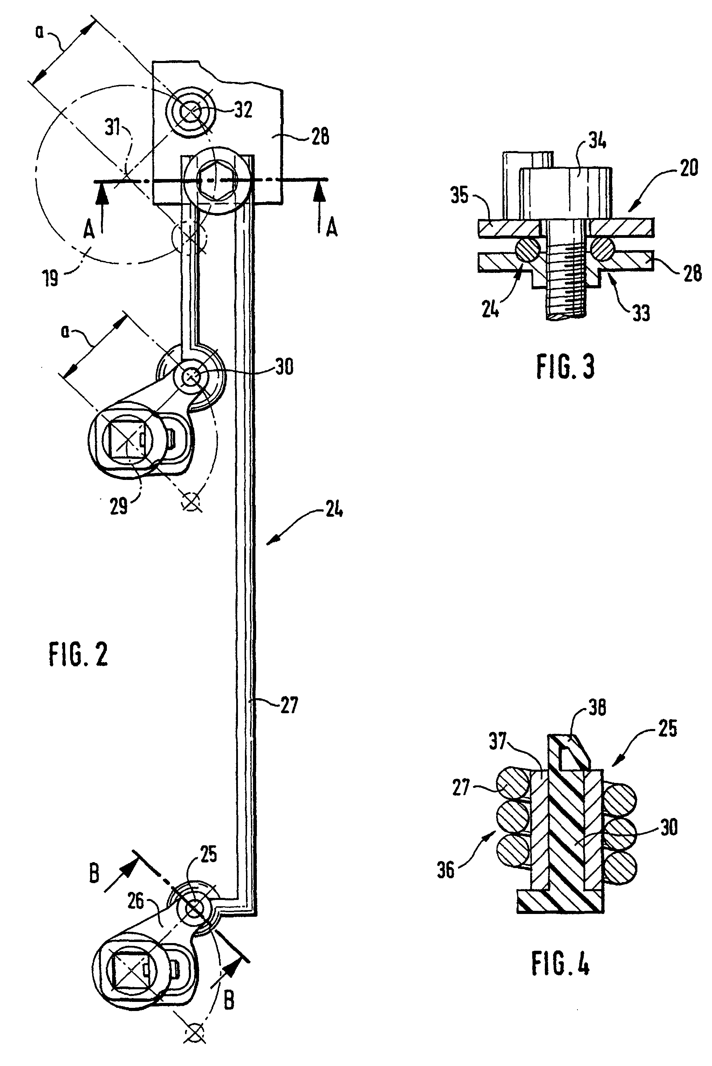

In Figur 2 ist ein Steuergestänge für die Schaltklappen 13 dargestellt, wie es in einer Anordnung gemäß Figur 1 zum Ansatz kommt. Die Kraftübertragung geschieht über Steuerstangen 24, wobei für jede Schaltklappe eine Steuerstange vorgesehen ist. Schaltklappenseitig sind die Steuerstangen 24 durch ein Gelenk 25 mit Klappenkurbeln 26 verbunden. Die einzelnen Steuerstangen 24 bestehen aus einem Draht 27 und werden auf einer Klemmplatte 28 zusammengeführt. Die Klemmplatte ist mit dem gestrichelt dargestellten Antrieb 19 verbunden. Die Länge der Klappenkurbel 26 ergibt sich aus einem Abstand a zwischen einer Klappenachse 29 und einem Lagerzapfen 30 des Gelenkes 25. Derselbe Abstand a ist zwischen einer Drehachse 31 des Antriebs und einer Klemmplattenaufnahme 32 realisiert.

Die mechanische Kopplung zwischen Steuerstangen 24 und Klemmplatte 28 dient als Einstellung 20 zur Justierung des Klappensystems (siehe Figur 3). Hierzu dient eine Einspannung 33 die aus der Klemmplatte, einer Schraube 34 und einer Scheibe 35 besteht. Die Steuerstangen sind in der Einspannung stufenlos axial verschiebbar, wodurch bei der Montage ein Toleranzausgleich erreicht werden kann. Durch Anziehen der Schraube 34 werden die Steuerstangen verspannt, so daß das System Steuerstangen-Klemmplatte eine starre Einheit ergibt.

Ein Beispiel für die Gestaltung des Gelenkes 25 zwischen Steuerstange 24 und Klappenkurbel 26 ist Figur 4 zu entnehmen. Der Draht 27 der Steuerstange ist zu einer schraubenfederförmigen Wicklung 36 gebogen. In diese Wicklung ist eine Buchse 37 eingesetzt. Diese wirkt mit dem Lagerzapfen 30 der Klappenkurbel zusammen. Um ein Abrutschen der Steuerstange zu vermeiden, kann der Lagerzapfen 30 einen Schnapphaken 38 aufweisen.

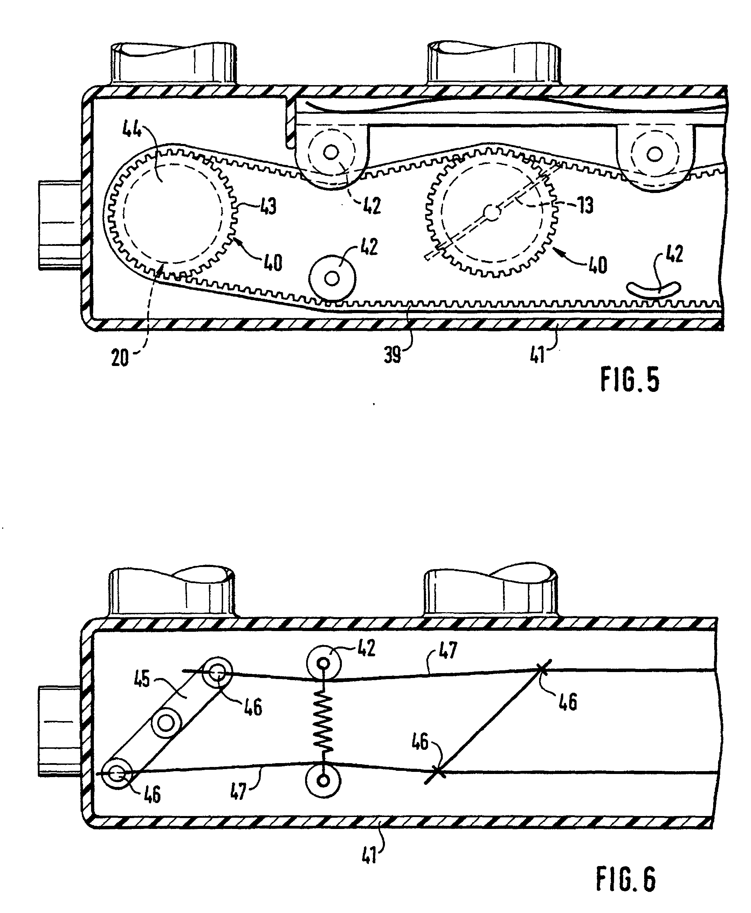

In Figur 5 ist ein Klappenantrieb dargestellt der durch ein Zahnriemen 39 erfolgt. Der Zahnriemen steht mit Zahnrädern 40 im Eingriff, die mit den Schaltklappen 13 verbunden sind. Die Steuereinheit für die Schaltklappen ist in einem kastenförmigen Gehäuse 41 untergebracht. In diesem Gehäuse sind Spannmittel 42 vorgesehen, die ein Verrutschen der Riemenzähne auf der Verzahnung der Zahnräder 40 verhindern. Die Einstellung 20 wird durch eine Welle-Nabe-Verbindung zwischen einer Verzahnung 43 und einem Grundkörper 44 des Zahnrades 40 realisiert. Bei der Montage kann eine Justierung der Schaltklappen durch eine Winkelverschiebung zwischen Grundkörper und Verzahnung erfolgen. Nach der Montage muß diese Einstellung fixiert werden. Dies kann zum Beispiel durch eine Klebverbindung erfolgen.

Die Steuereinheit gemäß Figur 6 ist ebenfalls in dem Gehäuse 41 untergebracht. Die Schaltklappen weisen Doppelhebel 45 auf an denen über Klemmgelenke 46 Seilzüge 47 angebracht sind. Die Justierung des Klappensystems kann über die Klemmgelenke 46 erfolgen. Zusätzlich können Spannmittel 42 an den Seilen angebracht sein.

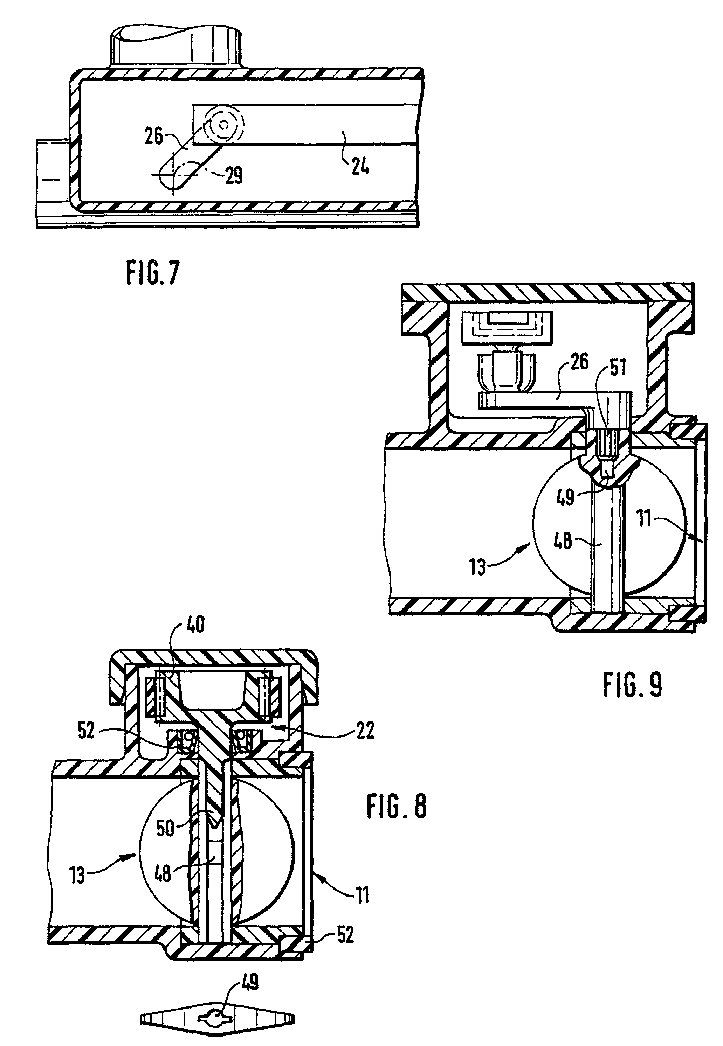

In Figur 7 werden die Klappenkurbeln 26 durch eine einzige Steuerstange 24 angetrieben. In dieser Version ist eine Justierung der Schaltklappen nur in der Klappenachse 29 möglich. Hierzu sind Möglichkeiten der konstruktiven Ausgestaltung den Figuren 8 und 9 zu entnehmen. Diese Einstellungsmöglichkeiten können selbstverständlich auch mit den Steuermechanismen in Figur 1 bis Figur 6 kombiniert werden.

Figur 8 stellt den Schnitt durch den Auslaß 11 eines Saugrohrs dar. In die Öffnung des Auslasses ist die montagegespritzte Schaltklappe 13 eingesetzt. Eine Klappenwelle 48 weist ein Aufnahmeloch 49 mit länglichem Querschnitt auf. Das Aufnahmeloch steht in mechanischer Verbindung mit der Ansteuerung 22 für die Schaltklappe, wobei die Ansteuerung aus dem Zahnrad 40 gebildet wird. Sowohl an der Ansteuerung, als auch einer Nut im Zylinderkopfflansch 12 sind Dichtmittel 52 vorgesehen. Die Ansteuerung kann mit einem Dorn 50 in das Aufnahmeloch 49 eingesteckt werden. Zwischen Dorn und Aufnahmeloch ist konstruktiv ein Spalt vorgesehen, so daß die Justierung der Schaltklappe 13 noch erfolgen kann. Der Spaltraum zwischen Aufnahmeloch 49 und Dorn 50 wird durch eine elastische Masse ausgefüllt. Nach Trocknung dieser Masse ist die justierte Schaltklappe fixiert.

Figur 9 zeigt eine Darstellung des Auslasses des Saugkanals mit eingesetzter montagegespritzter Schaltklappe 13 entsprechend Figur 8. Die Ansteuerung ist jedoch durch die Klappenkurbel 26 realisiert. Die mit einem Vielzahnprofil 51 in das Aufnahmeloch 49 der Klappenwelle 48 eingesteckt wird. Das Vielzahnprofil 51 besitzt gegenüber des Aufnahmelochs 49 Übermaß, so daß sich die Zähne des Profils bei der Montage der Klappenkurbel 26 in die Wände des Aufnahmelochs eingraben. Die Justierung der Schaltklappen muß vorher erfolgen.

Genauso ist es denkbar in dem Aufnahmeloch 49 eine korrespondierende Verzahnung vorzusehen. Ist die Verzahnung des Vielzahnprofils 51 und des Aufnahmelochs 49 hinreichend fein, kann eine Justierung der Klappen in kleinen Winkelschritten erfolgen.

## Patentansprüche

1. Kanalsystem, insbesondere Saugrohr für eine Brennkraftmaschine, welches
- mindestens einen Einlaß (10) aufweist,
- mindestens zwei Saugkanäle (17) mit Auslässen (11) aufweist, wobei in diese drehbar gelagerte Schaltklappen (13) eingesetzt sind und
- eine Schaltkraft eines Antriebs (19) über Kraftübertragungen (21), z.B. eine Gestänge, und über Ansteuerungen (22), z.B. Klappenkurbeln (26) auf die Schaltklappen übertragbar ist, wobei mechanische Kopplungen (23) zwischen den Schaltklappen (13), den Ansteuerungen (22), den Kraftübertragungen (21) und dem Antrieb (19) vorgesehen sind, die zumindest im wesentlichen spielfrei sind und wobei die Schaltklappen (13) stufenlos verstellbar sind, **dadurch gekennzeichnet, daß**
- für jede einzelne Schaltklappe (13) eine Einstellung (20) an einer der mechanischen Kopplungen (23) vorgesehen ist,
- die Kraftübertragungen aus Klappenkurbeln (26) bestehen, wobei diese fest mit den Schaltklappen (13) verbunden sind und
- die Ansteuerung aus Steuerstangen (24) besteht,
- an deren einem Ende ein Gelenk (25) als mechanische Kopplung zu den Klappenkurbeln (26) angebracht ist und
- deren anderes Ende in Einspannungen (33) einer Klemmplatte (28) befestigt ist, wobei die Einstellung in die Einspannung integriert ist, und
- die Klemmplatte die mechanische Kopplung zum Antrieb (19) darstellt.

2. Kanalsystem nach Anspruch 1, **dadurch gekennzeichnet, daß**
- die Kraftübertragungen aus Klappenkurbeln (26) bestehen, wobei diese fest mit den Schaltklappen (13) verbunden sind und
- die Ansteuerung aus Steuerstangen (24) besteht,
- an deren einem Ende ein Gelenk (25) als mechanische Kopplung zu den Klappenkurbeln (26) angebracht ist und
- deren anderes Ende in Einspannungen (33) einer Klemmplatte (28) befestigt ist, wobei die Einstellung in die Einspannung integriert ist, und
- die Klemmplatte die mechanische Kopplung zum Antrieb (19) darstellt.

3. Kanalsystem nach Anspruch 2, **dadurch gekennzeichnet, daß**
- die Steuerstangen (24) aus einem strangförmigen, biegbaren Halbzeug, insbesondere einem Draht (27), bestehen,
- die Gelenke an den Steuerstangen aus Buchsen (37) bestehen, die insbesondere in schraubenfederfsrmige Wicklungen (36) an den Enden der Steuerstangen eingepresst sind und
- die Buchsen (37) auf Lagerzapfen (30) an den Klappenkurbeln (26) gesteckt sind.

4. Kanalsystem nach einem der Ansprüche 2 oder 3, **dadurch gekennzeichnet, daß** die mechanische Kopplung des Antriebs (19) denselben Abstand zu einer Drehachse (31) des Antriebs aufweist, wie das Gelenk (25) zu Klappenachsen (29) der Schaltklappen (13), wobei Drehachse und Klappenmechanismus parallel zueinander verlaufen.

5. Kanalsystem nach Anspruch 1, **dadurch gekennzeichnet, daß** die Einstellungen (20) jeweils in die mechanische Kopplung zwischen Ansteuerung (22) und Kraftübertragung (21) integriert sind.

6. Kanalsystem nach Anspruch 5, **dadurch gekennzeichnet, daß**
- die Kraftübertragung aus mindestens einem Zahnriemen (39) besteht,
- die Ansteuerungen aus Zahnrädern (40) bestehen und
- die Zahnräder aus je einer Verzahnung (43) und je einem Grundkörper (44) bestehen, zwischen deren mechanischer Kopplung die Einstellung (20) realisiert ist.

7. Kanalsystem nach Anspruch 5, **dadurch gekennzeichnet, daß**
- die Kraftübertragungen aus Doppelhebeln (45) bestehen, wobei diese fest mit den Schaitkiappen (13) verbunden sind,
- die Doppelhebel je zwei Klemmgelenke (46) als mechanische Kopplungen aufweisen,
- die Ansteuerung aus zwei Seilzügen (47) besteht und
- die Einstellung durch die Klemmgelenke (46) zwischen Doppelhobeln (45) und Seilzügen (47) gebildet ist.

8. Kanalsystem nach Anspruch 1, **dadurch gekennzeichnet, daß** die Einstellungen (20) in die mechanische Kopplung zwischen Klappenachsen (29) der Schalklappen (13) und den als Klappenkurbeln (26) ausgeführten Ansteuerungen (22), insbesondere durch eine Klebeverbindung gebildet sind.

9. Kanalsystem nach Anspruch 8, **dadurch gekennzeichnet, daß** die als Klebeverbindung ausgeführten Einstellungen (20) durch ein elastisches Material, insbesondere Silikon, gebildet ist.

10. Kanalsystem nach einem der vorigen Ansprüche, **dadurch gekennzeichnet, daß** die Schattklappen mantagegespritzte (14) sind, die in das Kanalsystem integriert sind.

## Claims

1. Duct system, more especially the induction manifold for an internal combustion engine, which system
- has at least one inlet (10), and
- has at least two suction ducts (17) provided with outlets (11), rotatably mounted switching flaps (13) being inserted therein, and
- a switching force of a drive (19) can be transmitted to the switching flaps via force-transmitting means (21), for example a linkage, and via actuating means (22), for example flap cranks (26), mechanical couplings (23) being provided between the switching flaps (13), the actuating means (22), the force-transmitting means (21) and the drive (19), which couplings are at least substantially clearance-free, and the switching flaps (13) being steplessly adjustable,
**characterised in that**,
- for each individual switching flap (13) a setting means (20) is provided on one of the mechanical couplings (23),
- the force-transmitting means comprise flap cranks (26), these being securedly connected to the switching flaps (13), and
- the actuating means comprises control rods (24),
- a pivot joint (25) being mounted, on one end of said rods, as a mechanical coupling with the flap cranks (26), and
- the other end of said rods being secured in gripping means (33) of a clamping plate (28), the setting means being incorporated in the gripping means, and
- the clamping plate constitutes the mechanical coupling with the drive (19).

2. Duct system according to claim 1, **characterised in that**
- the force-transmitting means comprise flap cranks (26), these being securedly connected to the switching flaps (13), and
- the actuating means comprises control rods (24),
- a pivot joint (25) being mounted, on one end of said rods, as a mechanical coupling with the flap cranks (26), and
- the other end of said rods being secured in gripping means (33) of a clamping plate (28), the setting means being incorporated in the gripping means, and
- the clamping plate constitutes the mechanical coupling with the drive (19).

3. Duct system according to claim 2, **characterised in that**
- the control rods (24) are formed from a strand-like, bendable semi-finished product, more especially a wire (27),
- the pivot joints on the control rods comprise bushes (37) which, more especially, are pressed into helical spring-like windings (36) on the ends of the control rods, and
- the bushes (37) are placed on bearing pins (30) on the flap cranks (26).

4. Duct system according to one of claims 2 or 3, **characterised in that** the mechanical coupling of the drive (19) has the same spacing from an axis of rotation (31) of the drive as the pivot joint (25) has from flap axes (29) of the switching flaps (13), the axis of rotation and flap mechanism extending parallel to each other.

5. Duct system according to claim 1, **characterised in that** the setting means (20) are each incorporated in the mechanical coupling between the actuating means (22) and force-transmitting means (21).

6. Duct system according to claim 5, **characterised in that**
- the force-transmitting means comprises at least one toothed belt (39),
- the actuating means comprise toothed wheels (40), and
- the toothed wheels each comprise a toothing (43) and a basic body member (44), between the mechanical coupling of which the setting means (20) is provided.

7. Duct system according to claim 5, **characterised in that**
- the force-transmitting means comprise double levers (45), these being securedly connected to the switching flaps (13),
- the double levers each have two clamping pivot joints (46) as mechanical couplings,
- the actuating means comprises two cables (47), and
- the setting means is formed by the clamping pivot joints (46) between double levers (45) and cables (47).

8. Duct system according to claim 1, **characterised in that** the setting means (20) incorporated in the mechanical coupling between flap axes (29) of the switching flaps (13) and the actuating means (22), which are in the form of flap cranks (26), are formed, more especially, by an adhesive joint.

9. Duct system according to claim 8, **characterised in that** the setting means (20), which are in the form of an adhesive joint, are formed by a resilient material, more especially silicone.

10. Duct system according to one of the previous claims, **characterised in that** the switching flaps are assembly-sprayed flap devices (14), which are incorporated in the duct system.

## Revendications

1. Système de tubulures, notamment collecteur d'admission de moteur à combustion interne, comportant
- au moins une entrée (10),
- au moins deux tubulures d'admission (17) avec des sorties (11), avec au moins des volets de commutation (13) montés à rotation dans les sorties et
- un entraînement (19) transmettant sa force de commutation par des moyens de transmission (21), par exemple une tringlerie et des commandes (22), par exemple des manivelles de volet (26) pour transmettre la force d'actionnement aux volets de commutation, avec des couplages mécaniques (23) prévus au moins essentiellement sans jeu, entre les volets de commutation (13), les commandes (22) et les transmissions de force (21) ainsi que l'entraînement (19), et les volets de commutation (13) se réglant en continu,
**caractérisé en ce que**
- pour chaque volet de commutation (13) il est prévu un moyen de réglage (20) sur l'un des moyens de couplage mécanique (23),
- les transmissions de force se composant de manivelles de volets (26) reliées solidairement aux volets de commutation (13) et
- la commande se compose de tiges de commande (24)
- dont une extrémité comporte une articulation (25) pour le couplage mécanique sur les manivelles (26) et
- dont l'autre extrémité est fixée dans des moyens de serrage (33) d'une plaque de serrage (28), le réglage étant intégré dans le moyen de serrage, et
- la plaque de serrage constituant le moyen de couplage mécanique sur l'entraînement (19).

2. Système de tubulures selon la revendication 1,
**caractérisé en ce que**
- les transmissions de force se composent de manivelles de volets (26) reliées solidairement aux volets de commutation (13) et
- la commande se compose de tiges de commande (24),
- dont une extrémité reçoit une articulation (25) comme couplage mécanique avec les manivelles de volets (26) et
- dont l'autre extrémité reçoit, dans des moyens de serrage (33), une plaque de serrage (28), fixée, le réglage étant intégré au moyen de serrage et
- la plaque de serrage constituant le moyen de couplage mécanique pour l'entraînement (19).

3. Système de tubulures selon la revendication 2,
**caractérisé en ce que**
- les tiges de commande (24) sont formées d'un fil (27) notamment en forme de tige, comme produit semi-fini, souple,
- les articulations des tiges de commande sont constituées par des douilles (37) pressées notamment dans les spires (36) hélicoïdales à l'extrémité des tiges de commande et
- les douilles (37) sont engagées sur des tourillons (30) des manivelles de volets (26).

4. Système de tubulures selon l'une quelconque des revendications 2 ou 3,
**caractérisé en ce que**
le couplage mécanique de l'entraînement (19) présente la même distance par rapport à un axe de rotation (31) de l'entraînement que l'articulation (25) par rapport aux axes (29) des volets de commutation (13), l'axe de rotation et le mécanisme des volets étant parallèles.

5. Système de tubulures selon la revendication 1,
**caractérisé en ce que**
les réglages (20) sont intégrés chaque fois dans le couplage mécanique entre la commande (22) et la transmission de force (21).

6. Système de tubulures selon la revendication 5,
**caractérisé en ce que**
- la transmission de force se compose d'au moins une courroie crantée (39),
- les commandes sont formées de roues dentées (40) et
- les roues dentées se composent chaque fois d'une denture (43) et d'un corps de base (44) entre lesquels est réalisé le moyen de réglage (20) par couplage mécanique.

7. Système de tubulures selon la revendication 5,
**caractérisé en ce que**
- les transmissions de force sont composées de doubles leviers (45), ces leviers étant reliés solidairement aux volets de commutation (13),
- les leviers doubles ayant chaque fois deux articulations de serrage (46) comme moyens de couplage mécaniques,
- les commandes étant formées de deux câbles (47) et
- le réglage est formé par l'articulation de serrage (46) entre les doubles leviers (45) et les câbles de traction (47).

8. Système de tubulures selon la revendication 1,
**caractérisé en ce que**
les moyens de réglage (20) sont formés dans le couplage mécanique entre les axes (29) des volets de commutation (13) et les commandes (22) réalisées sous la forme de manivelles de volets (26), notamment par une liaison collée.

9. Système de tubulures selon la revendication 8,
**caractérisé en ce que**
la liaison collée constituant les moyens de réglage (20) est réalisée par une matière élastique, notamment en silicone.

10. Système de tubulures selon l'une quelconque des revendications précédentes,
**caractérisé en ce que**
les volets de commutation sont des volets injectés (14) intégrés dans le système de tubulures.
